# EUROPEAN PATENT SPECIFICATION

(11) **EP 2 600 029 B1**
(45) Date of publication and mention of the grant of the patent: **27.01.2016**
(21) Application number: 12744485.9
(22) Date of filing: 02.02.2012
(51) Int. Cl.: F16F 9/58, F16F 1/36, F16F 7/00, F16F 15/04, F16F 1/376, B60G 11/22

(54) **REBOUND STOPPER**
PRALLDÄMPFER
ARRÊT DE REBOND

(30) Priority: 10.02.2011 JP 2011027403; 10.02.2011 JP 2011027402
(43) Date of publication of application: 05.06.2013
(73) Proprietor: NOK Corporation, Minato-ku Tokyo 105-8585 (JP)
(72) Inventor: KONNO Yoshiro, Kitaibaraki-shi, Ibaraki 319-1535 (JP); TAKESUE Masami, Kitaibaraki-shi, Ibaraki 319-1535 (JP)
(74) Representative: TBK
(86) International application number: PCT/JP2012/052413
(87) International publication number: WO 2012/108332

(56) References cited:
- DE-U1- 7 802 898
- DE-U1- 20 215 950
- FR-A1- 2 895 049
- JP-A- 2006 200 558
- JP-U- 56 127 438
- US-A1- 2007 138 721

## Description

### Technical Field

The present invention relates to a rebound stopper.

### Background Art

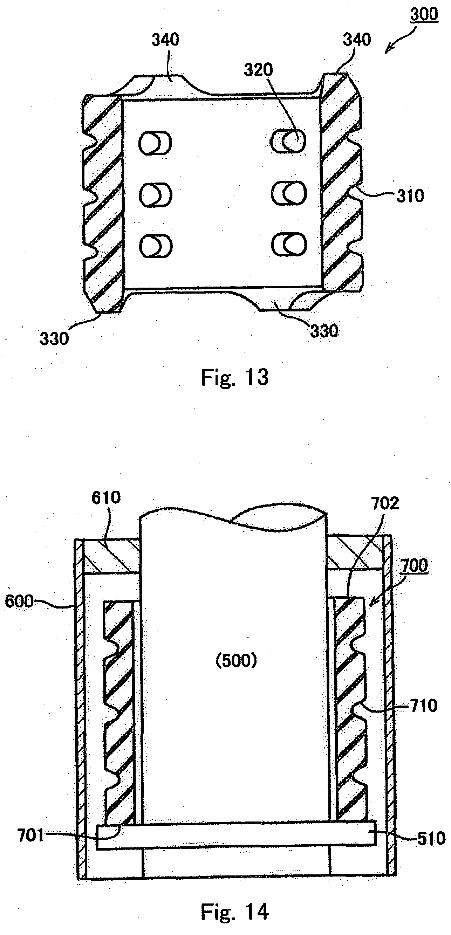

Conventionally, a rebound stopper has been arranged in an automobile suspension to absorb impact at the time of floating of a vehicle body in the air. As such a rebound stopper, an approximately cylindrical urethane-made rebound stopper has been known (Patent Literatures 1 and 2). Such a rebound stopper in the related art will be described with reference to Fig. 14. Fig. 14 is a schematic sectional view illustrating an attached state of the rebound stopper in the related art.

A rebound stopper 700 is structured to be arranged as having one end part 701 abutted to a rebound sheet 510 which is arranged at a rod 500 and having the other end part 702 hit to a rod guide 610 which is arranged at an inner circumference of a cylinder 600 when the rod 500 is extended by a certain amount or more. Then, the rebound stopper 700 absorbs impact by being compressed as being sandwiched by the rebound sheet 510 and the rod guide 610 owing to that the other end side 702 hits the rod guide 610.

However, since the urethane-made rebound stopper 700 has relatively high hardness and an initial compression amount (deflection amount) is small at the time of hitting, there has been a problem of large hitting noise.

There has also been known (Patent Literature 3) an approximately cylindrical urethane-made rebound stopper which is attached to an outer circumference of a rod arranged as having one end side faced to a rebound sheet which is arranged at the rod and having the other end side faced to a member to be hit which is arranged at an inner circumference of the cylinder and which absorbs impact as being compressed by the rebound sheet and the member to be hit as the other end side hitting the member to be hit when the rod is moved in a direction in which the rebound sheet approaches to the member to be hit; amongst further relevant background art (Patent Literature 4).

### Citation List

### Patent Literature

Patent Literature 1: Japanese Patent Application Laid-Open No. 2004-225744
Patent Literature 2: Japanese Patent Application Laid-Open No. 2002-39252
Patent Literature 3: DE 202 15 950 U1
Patent Literature 4: DE 78 02 898 U1

### Summary of Invention

### Technical Problem

An object of the present invention is to provide a rebound stopper which achieves decrease of hitting noise.

### Solution to Problem

The present invention adopts the following means to address the above issues.

That is, the present invention provides approximately cylindrical urethane-made rebound stopper which is attached to an outer circumference of a rod arranged reciprocably in a cylinder while being arranged as having one end side faced to a rebound sheet which is arranged at the rod and having the other end side faced to a member to be hit which is arranged at an inner circumference of the cylinder and which absorbs impact as being compressed by the rebound sheet and the member to be hit as the other end side hitting the member to be hit when the rod is moved in a direction in which the rebound sheet approaches to the member to be hit, wherein a plurality of protruding portions is arranged at each end side while the protruding portions at one end side and the protruding portions at the other end side are arranged at positions as being shifted in the circumferential direction.

According to the present invention, space portions formed among the protruding portions at the other end side exist respectively at the opposite side to the respective protruding portions at the one end side. Similarly, the space portions formed among the protruding portions at the one end side also exist respectively at the opposite side to the respective protruding portions at the other end side. Consequently, in a case that the rebound stopper is compressed by the rebound sheet and the member to be hit, the opposite side of the respective protruding portions can be deformed to be relieved to the space portions. Accordingly, an initial compression amount (deflection amount) of the rebound stopper at the time of hitting can be enlarged and hitting noise can be reduced.

It is preferable that the protruding portions are arranged at three positions in total at one end side at intervals of 120° in the circumferential direction and the protruding portions are arranged at three positions in total at the other end side at intervals of 120° in the circumferential direction while the protruding portions at the other end side are arranged at positions as being shifted by 60° in the circumferential direction respectively against arrangement positions of the protruding portions at the one end side.

Consequently, each distance between the protruding portions can be ensured large while improving concentricity of the rebound stopper against the rod. Accordingly, the above-mentioned space portions can be enlarged and the compression amount (deflection amount) of the rebound stopper can be enlarged.

Another invention provides an approximately cylindrical urethane-made rebound stopper which is attached to an outer circumference of a rod arranged reciprocably in a cylinder while being arranged as having one end side end-face faced to a rebound sheet which is arranged at the rod and having the other end side end-face faced to a member to be hit which is arranged at an inner circumference of the cylinder and which absorbs impact as being compressed by the rebound sheet and the member to be hit as the other end side end-face hitting the member to be hit when the rod is moved in a direction in which the rebound sheet approaches to the member to be hit, wherein a plurality of penetration holes penetrating from the inside of a cylinder to the outside is formed at a rebound stopper body.

According to the present invention, since the plurality of penetration holes is formed at the rebound stopper body, the rebound stopper becomes more likely to be deformed in the compression direction when the rebound stopper is compressed by the rebound sheet and the member to be hit. Accordingly, an initial compression amount (deflection amount) of the rebound stopper at the time of hitting can be enlarged and hitting noise can be reduced.

It is preferable that a plurality of circular grooves is formed at an outer circumferential side of the rebound stopper body respectively at intervals in a direction in which the rod is extended, and that the plurality of penetration holes is formed at groove bottoms of the circular grooves.

In this manner, owing to a synergetic effect of forming the plurality of circular grooves at the outer circumferential side of the rebound stopper body and forming the penetration holes at the groove bottoms of the circular grooves, the rebound stopper can be more likely to be compressed more effectively.

### Advantageous Effects of Invention

As described above, according to the present invention, the hitting noise can be reduced.

### Brief Description of Drawings

Fig. 1 is a perspective view of a rebound stopper according to an embodiment of the present invention.
Fig. 2 is a plane view of the rebound stopper according to the first embodiment of the present invention.
Fig. 3 is a schematic sectional view (sectional view at A-A of Fig. 2) of the rebound stopper according to the first embodiment of the present invention.
Fig. 4 is a schematic sectional view illustrating an attached state of the rebound stopper according to the first embodiment of the present invention.
Fig. 5 is a table indicating test results when dimensions of respective parts and the like are varied in the rebound stopper according to the first embodiment of the present invention.
Fig. 6 is a graph indicating relation between a load and a deflection amount of the rebound stopper according to the first embodiment of the present invention.
Fig. 7 is a perspective view of a rebound stopper according to a second embodiment of the present invention.
Fig. 8 is a schematic sectional view of the rebound stopper according to the second embodiment of the present invention.
Fig. 9 is a schematic sectional view of the rebound stopper according to the second embodiment of the present invention.
Fig. 10 is a schematic sectional view of the rebound stopper according to the second embodiment of the present invention.
Fig. 11 is a schematic sectional view illustrating an attached state of the rebound stopper according to the second embodiment of the present invention.
Fig. 12 is a perspective view of a rebound stopper according to a third embodiment of the present invention.
Fig. 13 is a schematic sectional view of a rebound stopper according to a fourth embodiment of the present invention.
Fig. 14 is a schematic sectional view illustrating an attached state of a rebound stopper of the related art.

### Description of Embodiments

In the following, aspects of the present invention will be exemplarily described in detail based on embodiments with reference to the drawings. Here, dimensions, materials, shapes, relative arrangement thereof and the like of structural components described in the embodiments are not intended to limit the scope of the present invention thereto unless otherwise specified.

### (First embodiment)

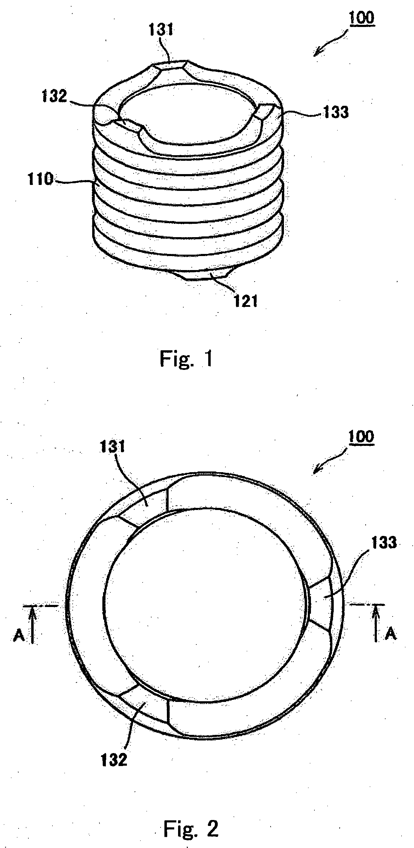

A rebound stopper according to a first embodiment of the present invention will be described with reference to Figs. 1 to 6.

### <Structure of rebound stopper>

In particular, a structure of the rebound stopper according to the first embodiment of the present invention will be described with reference to Figs. 1 to 4.

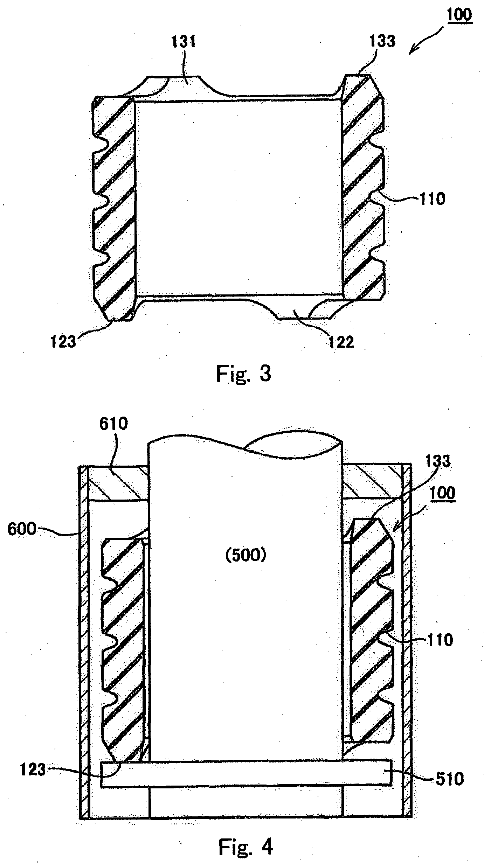

A rebound stopper 100 according to the present embodiment is used for an automobile suspension. That is, as illustrated in Fig. 4, the rebound stopper 100 is arranged at an outer circumference of a rod (piston rod) 500 which is arranged reciprocably in a cylinder 600 structuring a suspension. Further, the rebound stopper 100 is arranged as having one end side thereof faced to a rebound sheet 510 which is arranged at the rod 500 and having the other end side thereof faced to a rod guide 610 as a member to be hit which is arranged at an inner circumference of the cylinder 600. Here, the rod guide 610 functions as a bearing for the rod 500.

In a normal state, the one end side of the rebound stopper 100 is abutted to the rebound sheet 510 as being in a state that space is left between the other end side thereof and the rod guide 610. When a vehicle body floats in the air, the rod 500 is moved upwardly in Fig. 4. That is, the rod 500 is moved in a direction in which the rebound sheet 510 approaches to the rod guide 610. Subsequently, when a movement amount of the rod 500 exceeds a predetermined value, the other end side of the rebound stopper 100 hits the rod guide 610. Consequently, the rebound stopper 100 is compressed by the rebound sheet 510 and the rod guide 610 and absorbs impact.

Urethane which is a material having relatively high stiffness and high durability is adopted as a material of the rebound stopper 100. Further, the rebound stopper 100 is formed of an approximately cylindrical member and the rod 500 is inserted to the cylinder. A plurality of circular grooves 110 is formed at an outer circumferential face of the rebound stopper 100, so that the whole shape is to be a bellows shape. According to the above, it becomes easier to be compressed compared to a case without forming the plurality of circular grooves 110.

Further, in the rebound stopper 100 according to the present embodiment, a plurality (three in the present embodiment) of protruding portions is arranged at each end side thereof. For convenience of description, a plurality of protruding portions arranged at one end side is denoted respectively as a first protruding portion 121, a second protruding portion 122 and a third protruding portion 123. Further, a plurality of protruding portions arranged at the other end side is denoted respectively as a fourth protruding portion 131, a fifth protruding portion 132 and a sixth protruding portion 133.

The first protruding portion 121, the second protruding portion 122 and the third protruding portion 123 are arranged at intervals of 120° in the circumferential direction. Similarly, the fourth protruding portion 131, the fifth protruding portion 132 and the sixth protruding portion 133 are also arranged at intervals of 120° in the circumferential direction. The fourth protruding portion 131, the fifth protruding portion 132 and the sixth protruding portion 133 are arranged at positions as being shifted by 60° in the circumferential direction respectively against arrangement positions of the first protruding portion 121, the second protruding portion 122 and the third protruding portion 123.

In this manner, since the plurality of protruding portions is arranged, the first protruding portion 121, the second protruding portion 122 and the third protruding portion 123 at one end side of the rebound stopper 100 are abutted to the rebound sheet 510 in a normal state. At that time, a space portion is formed respectively between the first protruding portion 121 and the second protruding portion 122, between the second protruding portion 122 and the third protruding portion 123, and between the third protruding portion 123 and the first protruding portion 121. In a state that the other end side of the rebound stopper 100 hits the rod guide 610, the fourth protruding portion 131, the fifth protruding portion 132 and the sixth protruding portion 133 at the other end side of the rebound stopper 100 are in a state of being abutted to the rod guide 610. At that time, a space portion is formed respectively between the fourth protruding portion 131 and the fifth protruding portion 132, between the fifth protruding portion 132 and the sixth protruding portion 133, and between the sixth protruding portion 133 and the fourth protruding portion 131.

### <Advantages of rebound stopper according to the present embodiment>

As described above, according to the rebound stopper 100 of the present embodiment, the space portions formed among the protruding portions (the fourth protruding portion 131, the fifth protruding portion 132 and the sixth protruding portion 133) which are arranged at the other end side exist respectively at the opposite side to the respective protruding portions (the first protruding portion 121, the second protruding portion 122 and the third protruding portion 123) at the one end side. Similarly, the space portions formed among the protruding portions which are arranged at the one end side also exist respectively at the opposite side to the respective protruding portions at the other end side.

Consequently, in a case that the rebound stopper 100 is compressed by the rebound sheet 510 and the rod guide 610, the opposite side of the respective protruding portions can be deformed to be relieved to the space portions. Accordingly, an initial compression amount (deflection amount) of the rebound stopper 100 at the time of hitting can be enlarged and hitting noise can be reduced.

Further, the present embodiment adopts a structure in which the protruding portions (the first protruding portion 121, the second protruding portion 122 and the third protruding portion 123) are arranged at three positions in total at the one end side of the rebound stopper 100 at intervals of 120° in the circumferential direction and in which the protruding portions (the fourth projecting portion 131, the fifth protruding portion 132 and the sixth protruding portion 133) are arranged at three positions in total also at the other end side, while the protruding portions at the other end side are arranged at positions as being shifted by 60° in the circumferential direction respectively against arrangement positions of the protruding portions at the one end side.

Consequently, each distance between the protruding portions can be ensured large while improving concentricity of the rebound stopper 100 against the rod 500. Accordingly, the above-mentioned space portions can be enlarged and the compression amount (deflection amount) of the rebound stopper 100 can be enlarged.

Here, it is also possible to arrange four or more protruding portions respectively at both ends of the rebound stopper 100. However, in this case, each distance between the protruding portions becomes short and the compression amount of the rebound stopper 100 becomes small. Further, it is also possible to lengthen the distance between protruding portions by arranging two protruding portions respectively at both ends of the rebound stopper 100. However, in this case, concentricity of the rebound stopper against the rod 500 is worsened. In this regard, however, the protruding portions may not be arranged at three positions respectively at both ends of the rebound stopper 100 depending on usage environment. Here, the numbers of the protruding portions arranged at both ends are required to be the same. For example, it is also possible to arrange at three positions at one end side and at two positions at the other end side. Here, it is required that the protruding portions at the one end side and the protruding portions at the other end side are arranged as being shifted in the circumferential direction.

### <Others>

As described above, owing to that a plurality of the protruding portions is arranged respectively at both ends of the rebound stopper 100 and the protruding portions at one end side are arranged at positions being shifted in the circumferential direction from the protruding portions at the other end side, an initial compression amount (deflection amount) of the rebound stopper 100 at the time of hitting can be enlarged and hitting noise can be reduced.

However, when height of the protruding portions is set to be excessively high against total height (a distance between a top end of the protruding portions at one end side to a top end of the protruding portions at the other end side) of the rebound stopper 100 or when a compression rate of the rebound stopper 100 is set to be excessively large to be easily deformed, top ends of the protruding portions become more likely to be damaged. Accordingly, a test was performed to examine how high the height of the protruding portions might be set against the total height of the rebound stopper 100 and how large the compression rate might be set. That is, with the structure of the rebound stopper 100 described in the above embodiment, durability was examined while variously varying the total height and the height of protruding portions as well as the deflection amount at the time of applying an endurance load.

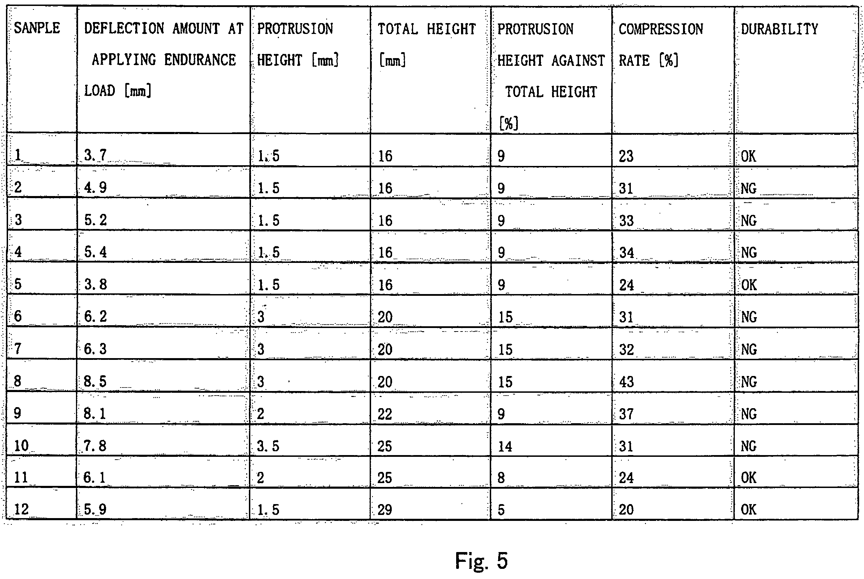

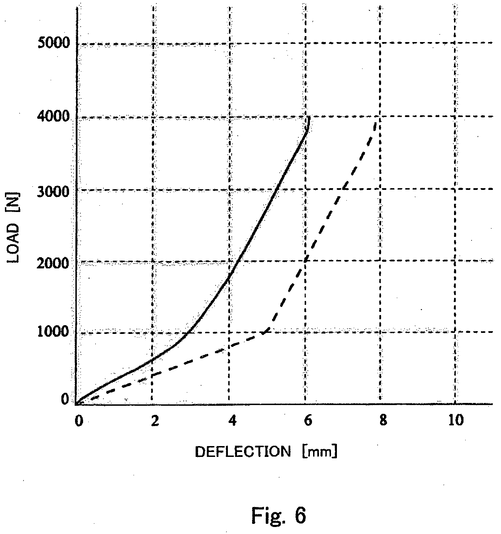

Fig. 5 is a table tabulating test results of various samples in "Deflection amount at applying endurance load", protrusion height (height of protruding portionss)", "Total height", "Protrusion height against total height", "Compression rate" and "Durability". With respect to "Durability", "OK" denotes non-occurrence of damage at top ends of the protruding portions and "NG" denotes occurrence of damage thereat. Further, Fig. 6 is a graph indicating relation between deflection and a load with sample 10 (NG sample) and sample 11 (OK sample) among the samples indicted in Fig. 5. In the graph, a solid line is a graph of sample 11 and a dotted line is a graph of sample 10.

The above test results revealed that the height of protruding portions should be preferably set to be 9% or lower against the total height of the rebound stopper 100 and the compression rate should be preferably set to be 24% or lower at the time of applying an endurance load.

### (Second embodiment)

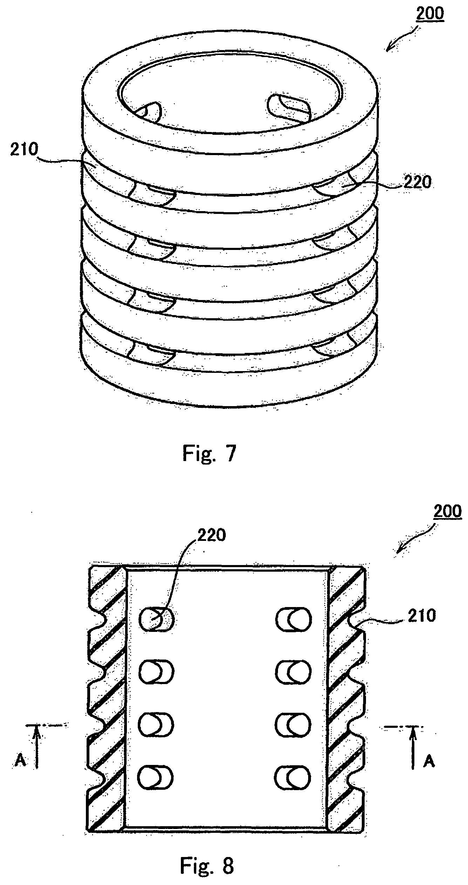

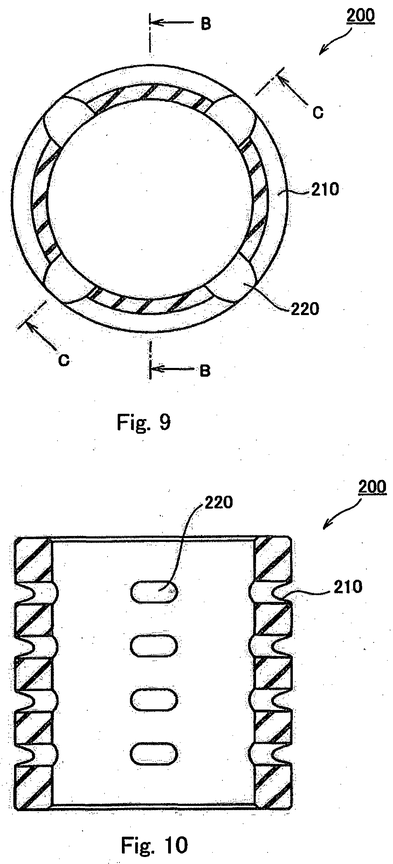

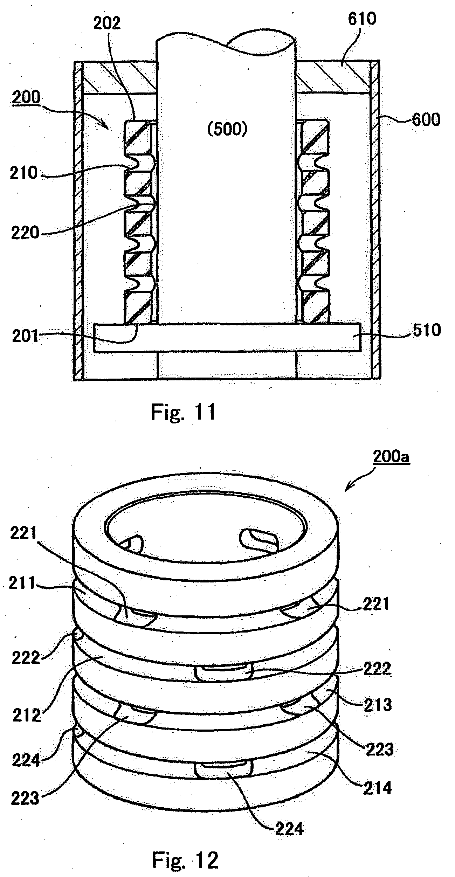

A rebound stopper of a second, not claimed embodiment of the present invention will be described with reference to Figs. 7 to 11. Fig. 7 is a perspective view of the rebound stopper according to the present embodiment. Figs. 8 to 10 are sectional views of the rebound stopper according to the present embodiment. Fig. 11 is a schematic sectional view illustrating an attached state of the rebound stopper according to the present embodiment. Here, Fig. 8 is a sectional view of the rebound stopper sectioned to pass through the center axis line and a position where a later-mentioned penetration hole 220 is not formed as corresponding to being sectioned at position B-B of Fig. 9. Fig. 9 is a sectional view of the rebound stopper sectioned to pass through positions where the penetration holes 220 are formed to be perpendicular to the center axis as corresponding to being sectioned at position A-A of Fig. 8. Fig. 10 is a sectional view of the rebound stopper sectioned to pass through the center axis and the positions where the penetration holes 220 are formed as corresponding to being sectioned at position C-C of Fig. 9. A rebound stopper 200 in Fig. 11 corresponds to that illustrated in Fig. 10.

### <Structure of rebound stopper>

In particular, a structure of the rebound stopper according to the second not claimed embodiment of the present invention will be described with reference to Figs. 7 to 11.

The rebound stopper 200 according to the present embodiment is used for an automobile suspension. That is, as illustrated in Fig. 11, the rebound stopper 200 is arranged at an outer circumference of a rod (piston rod) 500 which is arranged reciprocably in a cylinder 600 structuring a suspension. Further, the rebound stopper 200 is arranged as having one end side end-face 201 thereof faced to a rebound sheet 510 which is arranged at the rod 500 and having the other end side end-face 202 thereof faced to a rod guide 610 as a member to be hit which is arranged at an inner circumference of the cylinder 600. Here, the rod guide 610 functions as a bearing for the rod 500.

In a normal state, the one end side end-face 201 of the rebound stopper 200 is abutted to the rebound sheet 510 as being in a state that space is left between the other end side end-face 202 thereof and the rod guide 610. When a vehicle body floats in the air, the rod 500 is moved upwardly in Fig. 11. That is, the rod 500 is moved in a direction so that the rebound sheet 510 approaches to the rod guide 610. Subsequently, when a movement amount of the rod 500 exceeds a predetermined value, the other end side end-face 202 of the rebound stopper 200 hits the rod guide 610. Consequently, the rebound stopper 200 is compressed by the rebound sheet 510 and the rod guide 610 and absorbs impact.

Urethane which is a material having relatively high stiffness and high durability is adopted as a material of the rebound stopper 200. Further, the rebound stopper 200 is formed of an approximately cylindrical member and the rod 500 is inserted to the cylinder.

A plurality (four in the present embodiment) of circular grooves 210 is formed at an outer circumferential side of the rebound stopper 200 respectively at intervals in a direction in which the rod 500 is extended (i.e., axial direction), so that the whole shape is to be a bellows shape.

Further, a plurality of the penetration holes 220 penetrating from the inside of the cylinder to the outside is formed at groove bottoms of the plurality of circular grooves 210. In the present embodiment, four penetration holes 220 are formed at each of the four circular grooves 210. The four penetration holes 220 are formed at intervals of 90° in the circumferential direction. In the present embodiment, the four penetration holes 220 respectively formed at each of the four circular grooves 210 are arranged at the same positions in the circumferential direction for every circular groove 210. Accordingly, as clearly seen from the respective drawings, the plurality of penetration holes 220 is arranged on four lines in total as being linearly aligned in the direction in which the rod 500 is extended (i.e., axial direction).

### <Advantages of rebound stopper according to the present embodiment>

As described above, according to the rebound stopper 200 of the present embodiment, the plurality of penetration holes 220 is formed at a rebound stopper body. Therefore, when the rebound stopper 200 is compressed by the rebound sheet 510 and the rod guide 610, the rebound stopper 200 becomes more likely to be deformed in the compression direction. Accordingly, an initial compression amount (deflection amount) of the rebound stopper 200 at the time of hitting can be enlarged and hitting noise can be reduced.

In the present embodiment, owing to a synergetic effect of forming the plurality of circular grooves 210 at the outer circumferential side of the rebound stopper body and forming the penetration holes 220 at the groove bottoms of the circular grooves 210, the rebound stopper 200 can be more likely to be compressed more effectively. Accordingly, hitting noise can be effectively suppressed.

Further, the present embodiment adopts a structure in which the one end side end-face 201 of the rebound stopper 200 is abutted to the rebound sheet 510 and in which the other end side end-face 202 of the rebound stopper 200 hits the rod guide 610. Accordingly, in a case that the rebound stopper 200 is compressed by the rebound sheet 510 and the rod guide 610, damage at the time of hitting can be suppressed while preventing stress concentration at any specific part of the rebound stopper 200.

### (Third embodiment)

Fig. 12 illustrates a third not claimed embodiment of the present invention. In the second embodiment, the penetration holes respectively formed at each of the circular grooves are arranged at the same positions in the circumferential direction for every circular groove. In the present embodiment, pluralities of penetration holes formed respectively at adjacent circular grooves are shifted in the circumferential direction. Since the rest of the structure and effects other than the arrangement positions of the penetration holes is the same as that of the second embodiment, description thereof will be appropriately skipped.

A plurality (four in the present embodiment) of circular grooves is formed at an outer circumferential side of the rebound stopper 200a according to the present embodiment at intervals in a direction in which the rod is extended (i.e., axial direction), so that the whole shape is to be a bellows shape. In the following, for convenience of description, the circular grooves are denoted by a first circular groove 211, a second circular groove 212, a third circular groove 213 and a fourth circular groove 214.

Further, each of the first circular groove 211, the second circular groove 212, the third circular groove 213 and the fourth circular groove 214 has penetration holes 221, 222, 223, 224 formed respectively at four positions thereof. The four penetration holes 221, 222, 223, 224 respectively formed at every circular groove are formed at intervals of 90° in the circumferential direction.

The four penetration holes 221 formed at the first circular groove 211 and the four penetration holes 222 formed at the second circular groove 212 are arranged as being shifted by 45° in the circumferential direction. Further, the four penetration holes 221 formed at the first circular groove 211 and the four penetration holes 223 formed at the third circular groove 213 are at the same positions in the circumferential direction. Furthermore, the four penetration holes 221 formed at the first circular groove 211 and the four penetration holes 224 formed at the fourth circular groove 214 are shifted by 45° in the circumferential direction.

In this manner, in the rebound stopper 200a according to the present embodiment, the pluralities of penetration holes respectively formed at adjacent circular grooves are arranged as being shifted in the circumferential direction.

With the rebound stopper 200a structured as described above, it is also possible to obtain similar effects to that of the rebound stopper 200 according to the second embodiment. Further, in the present embodiment, since positions where the penetration holes are located are dispersed more widely compared to a case of the second embodiment, compressed deformation of the rebound stopper 200a can appear more evenly in the circumferential direction.

### <Others>

The numbers and arrangement positions of circular grooves and penetrating holes arranged at the rebound stopper are not limited to those described in the second and third embodiments. That is, the number and arrangement positions of circular grooves and penetration holes may be appropriately set in association with durability depending on usage environment. Further, in the second and third embodiments, the penetration holes are formed at the groove bottoms of the circular grooves so that the rebound stopper is effectively compressed. However, compressibility can be improved as well by forming penetration holes at positions other than the circular grooves. Here, even with a rebound stopper without circular grooves, compressibility can be improved by forming a plurality of penetration holes.

### (Fourth embodiment)

Fig. 13 illustrates a fourth embodiment of the present invention. The present embodiment adopts a structure that the penetration holes described in the second embodiment are formed additionally to the structure of the first embodiment. Fig. 13 is a schematic sectional view of a rebound stopper according to the fourth embodiment of the present invention.

Similarly to the rebound stopper 100 according to the first embodiment, a rebound stopper 300 according to the present embodiment adopts urethane which is a material having relatively high stiffness and high durability as a material thereof. Further, the rebound stopper 300 is formed of an approximately cylindrical member and the rod is inserted to the cylinder. A plurality of circular grooves 310 is formed at an outer circumferential face of the rebound stopper 300, so that the whole shape is to be a bellows shape. According to the above, it becomes easier to be compressed compared to a case without forming the plurality of circular grooves 310. Further, similarly to the case of the first embodiment, in the rebound stopper 300 according to the present embodiment, a plurality (three in the present embodiment) of protruding portions 330, 340 is arranged at each end side thereof. Since arrangement positions of the protruding portions 330, 340 are the same as in the first embodiment, description thereof will not be repeated.

Further, similarly to the rebound stopper 200 described as the second embodiment, in the rebound stopper 300 according to the present embodiment, a plurality of penetration holes 320 penetrating from the inside of the cylinder to the outside is formed at groove bottoms of the plurality of circular grooves 310. In the present embodiment, four penetration holes 320 are formed at each of the three circular grooves 310. The four penetration holes 320 are formed at intervals of 90° in the circumferential direction. In the present embodiment, the four penetration holes 320 formed at each of the three circular grooves 310 are arranged at the same positions in the circumferential direction for every circular groove 310. Accordingly, the plurality of penetration holes 320 is arranged on four lines in total as being linearly aligned in the direction in which the rod 500 is extended (i.e., axial direction).

In this manner, compared to a case of the first and second embodiments, with the rebound stopper 300 according to the present embodiment, a compression amount of the rebound stopper 300 can be further enlarged and hitting noise can be reduced.

Here, with respect to arrangement positions of the penetration holes, similarly to the third embodiment, it is also possible that the pluralities of penetration holes respectively formed at adjacent circular grooves are arranged as being shifted in the circumferential direction.

### Reference Signs List

- 100, 200, 200a, 300: Rebound stopper
- 110, 210, 310: Circular groove
- 121: First protruding portion
- 122: Second protruding portion
- 123: Third protruding portion
- 131: Fourth protruding portion
- 132: Fifth protruding portion
- 133: Sixth protruding portion
- 211: First circular groove
- 212: Second circular groove
- 213: Third circular groove
- 214: Fourth circular groove
- 220, 221, 222, 223, 224, 320: Penetration hole
- 500: Rod
- 510: Rebound sheet
- 600: Cylinder
- 610: Rod guide

## Claims

1. An approximately cylindrical urethane-made rebound stopper (100; 200; 200a; 300) which is attached to an outer circumference of a rod (500) arranged reciprocably in a cylinder (600) while being arranged as having one end side faced to a rebound sheet (510) which is arranged at the rod (500) and having the other end side faced to a member (610) to be hit which is arranged at an inner circumference of the cylinder (600) and which absorbs impact as being compressed by the rebound sheet (510) and the member (610) to be hit as the other end side hitting the member (610) to be hit when the rod (500) is moved in a direction in which the rebound sheet (510) approaches to the member (610) to be hit,
**characterised in that** a plurality of protruding portions (121-123, 131-133) is arranged at each end side while the protruding portions (121-123) at one end side and the protruding portions (131-133) at the other end side are arranged at positions as being shifted in the circumferential direction.

2. The rebound stopper (100; 200; 200a; 300) according to claim 1,
wherein the protruding portions (121-123) are arranged at three positions in total at one end side at intervals of 120° in the circumferential direction and the protruding portions (131-133) are arranged at three positions in total at the other end side at intervals of 120° in the circumferential direction while the protruding portions (131-133) at the other end side are arranged at positions as being shifted by 60° in the circumferential direction respectively against arrangement positions of the protruding portions (121-123) at the one end side.

3. The rebound stopper (100; 200; 200a; 300) according to claim 1 or claim 2,
wherein a plurality of penetration holes (220; 221-224; 320) penetrating from the inside of a cylinder (600) to the outside is formed at a rebound stopper body.

4. The rebound stopper (100; 200; 200a; 300) according to claim 3,
wherein a plurality of circular grooves (110; 210; 310) is formed at an outer circumferential side of the rebound stopper body respectively at intervals in a direction in which the rod (500) is extended, and
the plurality of penetration holes (220; 221-224; 320) is formed at groove bottoms of the circular grooves (110; 210; 310).

## Patentansprüche

1. Annähernd zylindrischer, aus Urethan gemachter Prallanschlag (100; 200; 200a; 300), der an einem Außenumfang einer Stange (500) befestigt ist, die hin- und herbewegbar in einem Zylinder (600) angeordnet ist, der so angeordnet ist, dass eine Stirnseite einer Prallplatte (510) gegenüberliegt, die an der Stange (500) angeordnet ist, und die andere Stirnseite einem aufzuprallenden Element (610) gegenüberliegt, das an einem Innenumfang des Zylinders (600) angeordnet ist, und der einen Aufprall aufnimmt, indem er durch die Prallplatte (510) und das aufzuprallende Element (610) zusammendrückbar ist, beim Aufprallen der anderen Stirnseite auf das aufzuprallende Element (610), wenn sich die Stange (500) in einer Richtung bewegt, in der sich die Prallplatte (510) dem aufzuprallenden Element (610) nähert,
**dadurch gekennzeichnet, dass** eine Vielzahl von vorstehenden Abschnitten (121-123, 131-133) an jeder Stirnseite angeordnet ist, während die vorstehenden Abschnitte (121-123) an einer Stirnseite und die vorstehenden Abschnitte (131-133) an der anderen Stirnseite an Positionen angeordnet sind, an denen sie in der Umfangsrichtung versetzt sind.

2. Prallanschlag (100; 200; 200a; 300) nach Anspruch 1,
wobei die vorstehenden Abschnitte (121-123) an insgesamt drei Positionen an einer Stirnseite in Intervallen von 120° in der Umfangsrichtung angeordnet sind und die vorstehenden Abschnitte (131-133) an insgesamt drei Positionen an der anderen Stirnseite in Intervallen von 120° in der Umfangsrichtung angeordnet sind, während die vorstehenden Abschnitte (131-133) an der anderen Stirnseite an Positionen angeordnet sind, an denen sie jeweils um 60° in der Umfangsrichtung gegen die Positionen versetzt sind, an denen die vorstehenden Abschnitte (121-123) an der einen Stirnseite angeordnet sind.

3. Prallanschlag (100; 200; 200a; 300) nach Anspruch 1 oder Anspruch 2,
wobei eine Vielzahl von Durchgangslöchern (220; 221-224; 320) von dem Inneren eines Zylinders (600) zu dem Äußeren durchdringend an einem Prallanschlagskörper ausgebildet ist.

4. Prallanschlag (100; 200; 200a; 300) nach Anspruch 3,
wobei eine Vielzahl von kreisförmigen Nuten (110; 210; 310) an einer Außenumfangsseite des Prallanschlagskörpers jeweils in Intervallen in einer Richtung ausgebildet ist, in der die Stange (500) ausfahrbar ist, und
die Vielzahl von Durchgangslöchern (220; 221-224; 320) an Nutgründen der kreisförmigen Nuten (110; 210; 310) ausgebildet ist.

## Revendications

1. Tampon de rebond réalisé en uréthane approximativement cylindrique (100 ; 200 ; 200a ; 300) qui est fixé à une circonférence extérieure d'une tige (500) agencée de manière à effectuer un mouvement de va-et-vient dans un cylindre (600) tout en étant agencée en ayant un côté d'extrémité faisant face à une feuille de rebond (510) qui est agencée au niveau de la tige (500) et ayant l'autre côté d'extrémité faisant face à un élément (610) à heurter qui est agencé au niveau d'une circonférence intérieure du cylindre (600) et qui absorbe le choc en étant comprimé par la feuille de rebond (510) et l'élément (610) à heurter à mesure que l'autre côté d'extrémité heurte l'élément (610) à heurter lorsque la tige (500) est déplacée dans une direction dans laquelle la feuille de rebond (510) s'approche de l'élément (610) à heurter,
**caractérisé en ce qu'**une pluralité de parties en saillie (121 à 123, 131 à 133) est agencée au niveau de chaque côté d'extrémité tandis que les parties en saillie (121 à 123) au niveau d'un côté d'extrémité et les parties en saillie (131 à 133) au niveau de l'autre côté d'extrémité sont agencées à des positions en étant décalées dans la direction circonférentielle.

2. Tampon de rebond (100 ; 200 ; 200a ; 300) selon la revendication 1,
dans lequel les parties en saillie (121 à 123) sont agencées en trois positions au total au niveau d'un premier côté d'extrémité à des intervalles de 120° dans la direction circonférentielle et les parties en saillie (131 à 133) sont agencées en trois positions au total au niveau de l'autre côté d'extrémité à des intervalles de 120° dans la direction circonférentielle tandis que les parties en saillie (131 à 133) au niveau de l'autre côté d'extrémité sont agencées à des positions en étant décalées de 60° dans la direction circonférentielle respectivement contre les positions d'agencement des parties en saillie (121 à 123) au niveau du premier côté d'extrémité.

3. Tampon de rebond (100 ; 200 ; 200a ; 300) selon la revendication 1 ou 2,
dans lequel une pluralité de trous de pénétration (220 ; 221 à 224 ; 320) pénétrant de l'intérieur d'un cylindre (600) vers l'extérieur est formée au niveau d'un corps de tampon de rebond.

4. Tampon de rebond (100 ; 200 ; 200a ; 300) selon la revendication 3,
dans lequel une pluralité de rainures circulaires (110 ; 210 ; 310) est formée au niveau d'un côté circonférentiel extérieur du corps de tampon de rebond respectivement à des intervalles dans une direction dans laquelle la tige (500) s'étend, et
la pluralité de trous de pénétration (220 ; 221 à 224 ; 320) est formée au niveau des fonds de rainures des rainures circulaires (110 ; 210 ; 310).
